Europäisches Patentamt

European Patent Office

Office européen des brevets

(19)

(11) Veröffentlichungsnummer: **0 124 849**
**B1**

## EUROPÄISCHE PATENTSCHRIFT

(12)

(45) Veröffentlichungstag der Patentschrift:
**01.06.88**

(21) Anmeldenummer: **84104858.0**

(22) Anmeldetag: **30.04.84**

(51) Int. Cl.⁴: **C 09 D 9/00**

(54) **Mittel zur Entfernung filmbildender polymerer Schutzüberzüge.**

(30) Priorität: **07.05.83 DE 3316876**

(43) Veröffentlichungstag der Anmeldung:
**14.11.84 Patentblatt 84/46**

(45) Bekanntmachung des Hinweises auf die Patenterteilung:
**01.06.88 Patentblatt 88/22**

(84) Benannte Vertragsstaaten:
**BE DE FR GB IT NL SE**

(56) Entgegenhaltungen:
**EP - A - 0 037 640**
**DE - A - 2 717 928**
**FR - A - 2 019 527**

**Die Akte enthält technische Angaben, die nach dem Eingang der Anmeldung eingereicht wurden und die nicht in dieser Patentschrift enthalten sind.**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Geke, Jürgen, Dr., Stoffeler Damm 108, D-4000 Düsseldorf (DE)**
Erfinder: **Meyer, Dieter, Bahlenstrasse 99, D-4000 Düsseldorf 13 (DE)**

## Beschreibung

Die Erfindung betrifft flüssige, lösungsmittelfreie, wässrige Mittel zur Entfernung filmbildender polymerer Schutzüberzüge, die eine Kombination aus Alkanolaminen und als Lösungsvermittler wirkende Substanzen sowie gegebenenfalls den pH-Wert regulierenden Säuren, Verdickungsmitteln, Tensiden, Korrosionsinhibitoren, Bioziden und/oder Farbstoffen enthalten.

Mit Lacken oder Farbmaterialien veschiedener Provenienz oberflächenbehandelte Gebrauchsgüter, beispielsweise Automobilkarossen, Fensterrahmen aus Metall oder ähnliches, können mit filmbildenden polymeren Schutzüberzügen versehen werden, um die Gegenstände bei Transport und/oder Lagerung gegen mechanische Schädigung und klimatische Einflüsse zu schützen. Diese Schutzschichten können alle Materialien bedecken, die beispielsweise am äusseren Aufbau einer Automobilkarosserie Verwendung finden, wie lackierte und metallische Oberflächen, Kunststoffe, Gummi und Glas.

Die verwendeten Materialien für derartige Schutzschichten, insbesondere für Automobilkarossen, sind meist Wachse, die mit organischen Lösungsmitteln, vorzugsweise Kohlenwasserstoffen oder niederen einwertigen Alkoholen, appliziert werden. Neuerdings werden für die Karosseriebeschichtung auch lösungsmittelhaltige und wässrige Polymerdispersionen auf dem Markt angeboten.

Werden die mit dem polymeren Schutzfilm überzogenen Gegenstände in Gebrauch genommen, so wird vorher der Polymerfilm entfernt. Dies geschieht in vielen Fällen unter Einsatz derjenigen organischen Lösungsmittel, die auch bei der Applikation der Schutzschichten Verwendung fanden, vorzugsweise also organischen Lösungsmitteln wie Kohlenwasserstoffen oder niederen einwertigen Alkoholen. Der Einsatz alkalischer anorganischer Produkte als Reinigerlösung für die Entfernung von polymeren Schutzüberzügen ist aus der JP-PS 7 567 845 bekannt. Nachteile der genannten Reinigungsverfahren sind die Belastung der Abwässer durch organische Lösungsmittel und/oder die anorganischen Salze, die noch dadurch erhöht wird, dass die anfallenden Abwässer neutralisiert werden müssen. Die alkalischen Produkte gefährden zudem die verwendeten beschichteten Materialien, insbesondere lackierte Flächen. Mit Verfärbungen der verwendeten Metalle, Flecken- oder Oxidbildung und Versprödung bzw. Quellung von Kunststoff-und Gummimaterial ist zu rechnen.

In der DE-A 2 717 928 wird ein Reinigungsmittel beschrieben, das zur Entfernung von Wachsen und Poliermitteln, die aus natürlichen oder synthetischen Wachsen bestehen, dient. Für die Zusammensetzung dieses wässrigen Reinigungsmittels sind drei Komponenten zwingend vorgeschrieben:

a) Phosphorsäureester, in denen sämtliche saure Gruppen der Phosphorsäure verestert sind;

b) Ammoniak oder Alkanolamine oder anorganische alkalische Mittel;
c) anionische und/oder nichtionische oberflächenaktive Mittel.

Daneben können derartige Reiniger noch weitere Hilfsbestandteile enthalten, beispielsweise Ethylenglykolether mit 1 bis 4 C-Atomen im Alkylrest, mehrwertige bzw. einwertige Alkohole oder Salze von Alkylbenzolsulfonsäuren mit kurzkettigen Alkylresten als hydrotrope Mittel. Für eine zufriedenstellende Reinigungswirksamkeit dieser Mittel ist die Anwesenheit der drei vorstehend angeführten Hauptbestandteile – aufgrund der synergistischen Wirkung dieser drei Komponenten – unumgänglich. Fehlt einer dieser Hauptbestandteile oder wird der falsche Phosphorsäureester eingesetzt, so resultiert eine wesentlich verschlechterte Reinigungswirkung. Ferner zeigen die Beispiele, dass für eine wirksame Reinigung auch eine mechanische Unterstützung durch Reiben unumgänglich ist.

Die EP-A 37 640 betrifft ein Mittel bzw. ein Verfahren zum Entfernen temporärer Schutzüberzüge auf Basis metall-vernetzter Polymere von Oberflächen. Die Mittel bestehen aus einer Kombination von Wasser, einem organischen Lösungsmittel, Ammoniak sowie einem Stabilisator, wobei der Gehalt an organischem Lösungsmittel zwischen 30 und 80 Gew.%, vorzugsweise zwischen 40 und 70 Gew.%, beträgt. Als Stabilisator können derartige Mittel nichtionische und anionische Tenside enthalten. Neben Ammoniak können diese Mittel ferner Amine oder Aminsalze, vorzugsweise Alkanolamine, aufweisen.

Wichtig für solche Mittel ist der Gehalt an organischen Lösungsmitteln in Kombination mit Ammoniak. Zur Entfernung der Schutzüberzüge bedarf es einer zweifachen Behandlung mit den beschriebenen Reinigungsmitteln: Gemäss einem Anwendungsbeispiel erfolgt zunächst eine Behandlung mit einer «softening composition», welche ein organisches Lösungsmittel, Ammoniak, Triethanolamin und nichtionische sowie anionische Tenside enthält. Nach einer Einwirkungszeit von 5 bis 10 Minuten wird sodann eine zweite Lösung auf die zu behandelnde Oberfläche aufgesprüht, die wieder Ammoniak und ein nichtionisches Tensid sowie einen Komplexbildner enthält.

Die Entfernung eines Konservierungs-Schutzmittels auf Wachsbasis mit einem Wasser-Dampf-Gemisch bei einer Temperatur von 90 bis 95°C wird in der DE-OS 2 926 197 erwähnt. Die Entfernung des Schutzfilms auf diesem Wege ist nicht nur sehr energieintensiv, sondern auch nicht ungefährlich, da die Gefahr des Verbrühens mit heissem Wasser oder Dampf besteht.

Überzüge, die nicht mit Reinigungsmittellösungen entfernbar sind, sondern von den damit überzogenen Gegenständen abgeschält werden müssen, werden in der DE-OS 2 263 311, der FR-PS 2 295 100 und der JP-OS 7 907 303 beschrieben. Nachteil dieses Verfahrens ist der hohe Zeitaufwand, der erforderlich ist, um das Schutzmaterial restlos von der damit überzogenen Oberfläche abzuschälen, und der als nicht praxisgerecht bezeichnet werden muss. An schwer zugänglichen Stellen von zum Beispiel Fahrzeugkarossen bleiben bei dieser Reinigungstechnik in der Regel Reste der Beschichtungsmaterialien zurück.

Aufgabe der vorliegenden Erfindung ist es, Mittel bereitzustellen, um polymere Schutzschichten problemlos zu entfernen. Diese Mittel sollen dabei keine organischen Lösungsmittel enthalten und auf rein wässriger Basis konzipiert sein, so dass sie als ökologisch und toxikologisch einwandfrei und unbedenklich eingestuft werden können. Dazu gehört auch, dass sie einerseits von sich aus keine hohe Salzfracht mitführen, andererseits in einem solchen pH-Bereich wirksam sind, dass nicht durch zusätzlich notwendige Neutralisation der Salzgehalt erhöht werden muss. Ein Einsatz bei Raumtemperatur sowie kurze, praxisgerechte Behandlungszeiten für die Ablösung des Polymerfilms sind ebenfalls wünschenswert.

Überraschenderweise gelingt die Ablösung von polymeren Schutzfilmen bei Verwendung einer Kombination von Alkanolaminen und mindestens einer hydrotropen Substanz.

Die Erfindung betrifft flüssige, lösungsmittelfreie, wässrige Mittel zur Entfernung filmbildender polymerer Schutzüberzüge, vorzugsweise von Automobilkarossen, auf der Basis von Alkanolaminen und hydrotropen Substanzen, dadurch gekennzeichnet, dass sie einen pH-Wert im Bereich von 8 bis 9,5 aufweisen und die folgenden Komponenten, jeweils bezogen auf die Gesamtformulierung, enthalten:

a) 3 bis 30 Gewichtsprozent 1- bis 3-fach durch Hydroxyalkylgruppen, mit 1 bis 4 C-Atomen im Alkylrest, substiuierte Amine

b 0,3 bis 15 Gewichtsprozent mindestens einer hydrotropen Substanz aus der Gruppe:

b1) Monoalkylether von Di-, Tri- oder Tetraethylen- beziehungsweise -propylenglykolen mit 1 bis 4 C-Atomen im Alkylrest,

b2) Toluol-, Cumol- oder Xylolsulfonat, Ligninsulfonate, Ethersulfate oder Sulfate einwertiger Alkohole mit 10 bis 20 C-Atomen,

b3) Salze von Fettsäuren mit 16 bis 24 C-Atomen, b4) Harnstoff,

b5) saure Ester der Phosphorsäure beziehungsweise deren Salze,

b6) wasserlösliche polymere Substanzen anionischen, nichtionischen oder kationischen Charakters aus der Gruppe Polycarbonsäuren, Polyglykolether, Polyvinylalkohole, Polysaccharidderivate, protonierte oder methylierte Polyethylenimine oder deren Gemische, sowie gegebenenfalls

c) den pH-Wert regulierende Carbonsäuren und/oder Mineralsäuren,

d) Verdickungsmittel,

e) Tenside,

f) Korrosionsinhibitoren,

g) Biozide und/oder

h) Farbstoffe.

Die in den erfindungsgemässen wässrigen Mitteln zur Entfernung filmbildender polymerer Schutzüberzüge enthaltenen Substanzen sind einzeln nicht wirksam. Sie bewirken keine Ablösung des Polymerfilmes. Erst die Kombination von Alkanolaminen und hydrotropen Substanzen erfüllt die gestellten Anforderungen, wie rasche und vollständige Ab- und gegebenenfalls Auflösung des Polymerfilms.

Die wirksamen Kombinationen enthalten als Alkanolamine 1- bis 3fach durch Hydroxyalkylgruppen mit 1 bis 4 C-Atomen im Alkylrest substituierte Amine, wobei vorzugsweise Diethanolamin und Triethanolamin Verwendung finden. Die erfindungsgemässen Mittel enthalten Alkanolamine in Konzentrationen von 3 bis 30%, bevorzugt 5 bis 10%.

Als für die Kombination geeignete und in Verbindung mit den Alkanolaminen die gewünschte Wirkung hervorrufende hydrotrope, also die Löslichkeit verbessernde Substanzen sind zahlreiche Verbindung geeignet. Es werden z.B. Monoalkylether von Di-, Tri- oder Tetraethylen- bzw. Propylenglykolen mit 1 bis 4 C-Atomen im Alkylrest, beispielsweise Propyldipropylenglykol, verwendet. Auch Verbindungen aus der Gruppe der Sulfonate, wie Ligninsulfonate, Toluol-, Cumol- oder Xylolsulfonat können eingesetzt werden.

Als hydrotrope Substanzen im Sinne der Erfindung sind ebenfalls Ethersulfate bzw. Sulfate einwertiger Alkohole mit 10 bis 20 C-Atomen, Salze von Fettsäuren mit 16 bis 24 C-Atomen, Harnstoff oder saure Ester der Phosphorsäure beziehungsweise deren Salze verwendbar. Auch wasserlösliche polymere Substanzen anionischen, nichtionischen oder kationischen Charakters aus der Gruppe: polymere Polycarbonsäuren, Polyglykolether, Polyvinylalkohole, Polysaccharidderivate und protonierte bzw. methylierte Polyethylenimine sowie deren Gemische können mit Erfolg eingesetzt werden.

In den erfindungsgemässen flüssigen Entkonservierungsmitteln sind die genannten hydrotropen Substanzen in Anwendungskonzentrationen von 0,3 bis 15%, vorzugsweise von 1 bis 3% enthalten. Insbesondere werden anionische Polymere in Konzentrationen von 0,4 bis 4%, vorzugsweise von 1 bis 2%, nichtionische Polymere in Konzentrationen von 0,3 bis 8%, vorzugsweise 1 bis 2% und kationische Polymere in Konzentrationen von 0,3 bis 10%, vorzugsweise 2 bis 3% eingesetzt.

Die pH-Werte der Anwendungslösungen der erfindungsgemässen Entkonservierungsmittel liegen zwischen 8,5 und 9,5. Die gewünschte Wirkung der erfindungsgemässen Mittel ist relativ unabhängig vom pH-Wert. Die Einstellung des pH-Wertes wird mit organischen oder anorganischen Säuren, beispielsweise Essigsäure, Isononansäure, Phosphonsäuren oder bevorzugt Phosphorsäure, auf den gewünschten Wert vorgenommen.

Je nach Applikationsverfahren kann es vorteilhaft sein, einen geeigneten Viskositätsgrad einzustellen. So ist ein viskoses Produkt für die manuelle Applikation besser geeignet als ein dünnflüssiges, während bei automatischen Sprüh- bzw. Spritzverfahren, die denen einer Autowaschstrasse vergleichbar sind, niedrigviskose und daher besser pump- und sprühbare und zum Recycling geeignete Produkte gewählt werden. Durch Zusatz geeigneter Verdickungsmittel kann die Viskosität je nach den Anforderungen eingestellt werden. Als Verdickungsmittel bevorzugt verwendet werden polymere Polycarbonsäuren, Cellulosederivate, z.B. Carboxymethylcellulose oder andere ionische oder nichtionische Polymere, die auch als hydrotrope Substanzen Bestandteil der dualen Kombination der erfindungsgemässen Mittel sein können.

Den Entkonservierungsmitteln können zur besseren Benetzung der zu behandelnden Oberflächen und/oder zur Schaumregulierung zusätzlich Tenside zugegeben werden. Dies ist besonders dann notwendig, wenn die Mittel bei Spritzverfahren mit Drücken zwischen 1 und 3 bar eingesetzt werden sollen. Je nach der Art der Aufbringung der Mittel können anionische, nichtionische oder kationische Tenside verwendet werden, wobei die Tenside die gleiche Ionogenität haben müssen wie die eingesetzten hydrotropen Substanzen. Für Spritzverfahren sind nur nichtionische Tenside verwendbar, während für Tauch- oder Sprühverfahren auch zusätzlich anionische oder kationische Tenside geeignet sind.

Gegebenenfalls können den Mitteln gemäss der Erfindung auch Inhibitoren für Zink, Leicht- und/oder Buntmetalle zugesetzt werden, wie z.B. Phosphorsäureester, Benzotriazol oder Tolyltriazol. Zusätzlich ist gegebenfalls auch die Zugabe von Bioziden, wie Gluconaldehyd oder Isothiazolinen und Derivaten möglich.

Zur besseren Verfolgung des Ablösevorganges beim Aufbringen der Mittel und der Ab- bzw. Auflösung des Schutzfilmes können gegebenenfalls Farbstoffe zugesetzt werden. Dies ist nicht mehr notwendig, wenn als hydrotrope Komponente beispielsweise farbige Sulfonate, wie Ligninsulfonate, verwendet werden.

Die erfindungsgemässen Produkte sind bei Temperaturen ab Raumtemperatur einsetzbar. Sie sind sowohl für Tauch- als auch für Sprüh- und Spritzverfahren sowie für die manuelle Applikation geeignet. Werden Materialien, die mit einem polymeren Schutzfilm überzogen sind, in eine entsprechende Lösung getaucht, die die Mittel gemäss der Erfindung enthält, so darf die Unterwanderung des Polymerfilms nicht länger als 1 bis 2,5 Minuten dauern. Mittels einer Wasserbrause wird der noch anhaftende, praktisch aufgelöste Polymerrest abgespült. In Sprühverfahren werden beschichtete Materialien mit einer erfindungsgemässen Lösung ca. 20 bis 30 Sek. besprüht und nach einer Einwirkzeit von 1,5 bis 2 min. mittels einer Wasserbrause abgesoült, wobei keine Reste des Polymerfilms zurückbleiben. Zeiten von 5 min. und länger zwischen Applikation der Lösung und vollständiger Ab- bzw. Auflösung der Polymerschutzschicht sind zu lang und für die praktische Anwendung nicht mehr tolerierbar.

Die Erfindung wird durch die nachstehenden Beispiele näher erläutert.

Die Formulierungen der erfindungsgemässen Mittel (nachstehende Beispiele) wurden getestet an Blechen, die mit Schutzfilmen auf der Basis wässriger Polymerdispersionen bzw. -emulsionen sowie mit dem Produkt Eskagen 250ᴿ bzw. Skinfilm VR 56ᴿ überzogen waren. Lackierte und nichtlackierte polymerbeschichtete Bleche wurden nach folgenden Methoden mit den erfindungsgemässen Mitteln behandelt:
a) Die beschichteten Bleche wurden bis zur erkennbaren Polymerfilm-Unterwanderung in eine entsprechende Lösung gemäss der Erfindung getaucht. Dies durfte nicht länger als 1 bis 2,5 Minuten dauern. Daraufhin wurde mittels einer Wasserbrause kurz der noch anhaftende, praktisch aufgelöste Polymerrest abgespült.
b) Die beschichteten Bleche wurden mit einer erfindungsgemässen Lösung ca. 20 bis 30 Sekunden besprüht und nach einer Einwirkzeit von 1,5 bis 2 Minuten mittels einer Wasserbrause abgespült.

Nach der Behandlung mit den nachfolgend angegebenen Mitteln erfolgte eine vollständige Ab- bzw. Auflösung der Polymerschutzschicht im angegebenen Zeitintervall.

Die erfindungsgemässen Mittel wiesen folgende Zusammensetzung auf (angegeben in Anwendungsprozenten, die Angabe bezieht sich auf den jeweiligen Aktivsubstanzgehalt):

Beispiel 1
5% Diethanolamin
0,5% Phosphorsäure und
1% Natrium-Cumolsulfonat.

Die gewünschte Wirkung der Rezeptur konnte auch erzielt werden, wenn statt Natrium-Cumolsulfonat je eine der folgenden Substanzen zugegeben wurde.:

0,5% Carboxymethylcellulose, MG 5000 (Relatin U 5000ᴿ) oder
1% Phosphorsäureester (Triton QS 44ᴿ) oder
1% Rizinolsäure oder
1% Laurylethersulfat (Texapon NSOᴿ) oder
1,5% Harnstoff oder
3% Butyldiglykol oder
2% eines nichtionischen Lösungsvermittlers auf der Basis von natürlicher Glukose (Triton CG 110ᴿ).

Beispiel 2
7% Diethanolamin
1% Natriumtoluolsulfonat
2% eines Anlagerungsproduktes von 30 EO und 60 PO an Ethylendiamin
0,5% Phosphorsäure

Beispiel 3
5% Diethanolamin
2% eines Anlagerungsproduktes von 8 EO an Nonylphenol
3% protoniertes Polyethylenimin

Beispiel 4
6% Diethanolamin
2% eines Anlagerungsproduktes von 8 EO an Nonylphenol
2% Polyvinylalkohol

Beispiel 5
6% Diethanolamin
2% eines Anlagerungsproduktes von 8 EO an Nonylphenol
2% Propyldipropylenglykol
15% des Natriumsalzes eins Monoesters der Phosphorsäure und eines einwertigen Alkohols C₁₂ bis C₁₈ + 10 EO

Beispiel 6
8% Triethanolamin
1% eines Anlagerungsproduktes von 8 EO an Nonylphenol
3% Butyldiglykol
1% einer polymeren Polycarbonsäure (Latecol Dᴿ)
0,3% Phosphorsäure

Beispiel 7
7% Triethanolamin
2% Butyldiglykol
1% Lauryldimethylbenzylammoniumchlorid
0,4% Phosphorsäure

Beispiel 8
5% Diethanolamin
2% eines Anlagerungsproduktes von 10 EO an einen einwertigen Alkohol
2% Butyldiglykol
1% Ethoxyliertes Ethylenglykol (Polydiolᴿ 600)
0,3% Tolyltriazol
0,5% Phosphorsäure

Beispiel 9
7% Triethanolamin
2% eines Anlagerungsproduktes von 4 EO an Octylalkohol
2% Butyldiglykol
2,5% Isononansäure

In den vorstehenden Beispielen bedeuten:
EO = Ethylenoxid
PO = Propylenoxid

**Patentansprüche**

1. Flüssige, lösungsmittelfreie, wässrige Mittel zur Entfernung filmbildender polymerer Schutzüberzüge, vorzugsweise von Automobilkarossen, auf der Basis von Alkanolaminen und hydrotropen Substanzen, dadurch gekennzeichnet, dass sie einen pH-Wert im Bereich von 8 bis 9,5 aufweisen und die folgenden Komponenten, jeweils bezogen auf die Gesamtformulierung, enthalten:

a) 3 bis 30 Gewichtsprozent 1- bis 3-fach durch Hydroxyalkylgruppen, mit 1 bis 4 C-Atomen im Alkylrest, substiuierte Amine

b) 0,3 bis 15 Gewichtsprozent mindestens einer hydrotropen Substanz aus der Guppe:
b1) Monoalkylether von Di-, Tri- oder Tetraethylen- beziehungsweise -propylenglykolen mit 1 bis 4 C-Atomen im Alkylrest,
b2) Toluol-, Cumol- oder Xylolsulfonat, Ligninsulfonate, Ethersulfate oder Sulfate einwertiger Alkohole mit 10 bis 20 C-Atomen,
b3) Salze von Fettsäuren mit 16 bis 24 C-Atomen,
b4) Harnstoff,
b5) saure Ester der Phosphorsäure beziehungsweise deren Salze,
b6) wasserlösliche polymere Substanzen anionischen, nichtionischen oder kationischen Charakters aus der Gruppe Polycarbonsäuren, Polyglykolether, Polyvinylalkohole, Polysaccharidderivate, protonierte oder methylierte Polyethylenimine oder deren Gemische, sowie gegebenenfalls
c) den pH-Wert regulierende Carbonsäuren und/oder Mineralsäuren,
d) Verdickungsmittel,
e) Tenside,
f) Korrosionsinhibitoren,
g) Biozide und/oder
h) Farbstoffe.

2. Flüssige, lösungsmittelfreie, wässrige Mittel nach Anspruch 1, dadurch gekennzeichnet, dass sie als Komponente a Diethanolamin enthalten.

3. Flüssige, lösungsmittelfreie, wässrige Mittel nach Ansprüchen 1 und 2, dadurch gekennzeichnet, dass sie die Komponente a in Konzentrationen von 5 bis 10 Gewichtsprozent, bezogen auf die Gesamtformulierung, enthalten.

4. Flüssige, lösungsmittelfreie, wässrige Mittel nach Ansprüchen 1 und 2, dadurch gekennzeichnet, dass sie die Komponente b in Konzentrationen von 1 bis 3 Gewichtsprozent, bezogen auf die Gesamtformulierung enthalten.

**Claims**

1. Liquid, solvent-free aqueous preparations based on alkanolamines and hydrotropic substances for the removal of film-forming polymeric protective coatings, preferably from car bodies, characterized in that they have a pH value of from 8 to 9.5 and contain the following components, based in each case on the formulation as a whole:

a) 3 to 30% by weight amines substituted once to three times by hydroxyalkyl groups containing 1 to 4 C-atoms in the alkyl radical,
b) 0.3 to 15% by weight of at least one hydrotropic substance from the group comprising
b1) monoalkyl ethers of di-, tri- or tetraethylene or -propylene glycols containing 1 to 4 C-atoms in the alkyl radical,
b2) toluene, cumene or xylenesulfonate, lignin sulfonates, ether sulfates or sulfates of monohydric C₁₀–C₂₀ alcolhols,
b3) salts of C₁₆–C₂₄ fatty acids,
b4) urea,

b5) acid esters of phosphoric acid or salts thereof,

b6) water-soluble polymeric substances of anionic, nonionic or cationic character from the group comprising polycarboxylic acids, polyglycol ethers, polyvinyl alcohols, polysaccharide derivatives, protanated or methylated polyethyleneimines or mixtures thereof and optionally

c) pH-regulating carboxylic acids and/or mineral acids,

d) thickeners,

e) surfactants,

f) corrosion inhibitors,

g) biocides and/or

h) dyes.

2. Liquid, solvent-free aqueous preparations as claimed in claim 1, characterized in that they contain diethanolamine as component a).

3. Liquid, solvent-free aqueous preparations as claimed in claims 1 and 2, characterized in that they contain component a) in concentrations of 5 to 10% by weight, based on the formulation as a whole.

4. Liquid, solvent-free aqueous preparations as claimed in claim 1 and 2, characterized in that they contain component b) in concentrations of 1 to 3% by weight, based on the formulation as a whole.

**Revendications**

1. Produits liquides aqueux, exempts de solvants, à base d'alcanolamines et de substances hydrotropes pour l'enlèvement de revêtements protecteurs à base de polymères filmogènes, de préférence de carrosseries d'automobiles, produits caractérisés en ce qu'ils présentent un pH dans la plage de 8 à 9,5, et contiennent les composants suivants, dans chaque cas par rapport à la formulation totale:

a) de 3 à 30% en poids d'amines substituées une à trois fois par des groupes hydroxyalkyle ayant de 1 à 4 atomes de carbone dans le radical alkyle,

b) de 0,3 à 15% en poids d'au moins une substance hydrotrope choisie parmi:

$b_1$) des éthers monoalkyliques de di-, tri- ou tétraéthylène- ou respectivement – propylèneglycols, ayant de 1 à 4 atomes de carbone dans le radical alkyle,

$b_2$) des toluène-, cumène- ou xylènesulfonates, ligninesulfonates, éther-sulfates ou sulfates d'alcools monovalents ayant de 10 à 20 atomes de carbone,

$b_3$) des sels d'acides gras ayant de 16 à 24 atomes de carbone,

$b_4$) l'urée,

$b_5$) des esters acides de l'acide phosphorique ou, respectivement, des sels de ceux-ci,

$b_6$) des substances polymères solubles dans l'eau, de caractère anionique, non ionique ou cationique, choisies parmi des acides polycarboxyliques, éthers de polyglycols, alcools polyvinyliques, dérivés de polysacharides, polyéthylènimines méthylées ou à protons fixés, ou des mélanges de ceux-ci, ainsi qu'éventuellement

c) des acides carboxyliques et/ou des acides minéraux régulateurs du pH,

d) des épaississants,

e) des agents tensio-actifs,

f) des inhibiteurs de corrosion,

g) des biocides et/ou

h) des colorants.

2. Produits liquides aqueux, exempts de solvants, selon la revendication 1, caractérisés en ce qu'ils contiennent de la diéthanolamine en tant que composant (a).

3. produits liquides aqueux, exempts de solvants, selon les revendications 1 et 2, caractérisés en ce qu'ils contiennent le composant (a) à des concentrations de 5 à 10% en poids, par rapport à la formulation totale.

4. produits liquides aqueux, exempts de solvants, selon les revendications 1 et 2, caractérisés en ce qu'ils contiennent le composant (b) à des concentrations de 1 à 3% en poids, par rapport à la formulation totale.